# EUROPÄISCHE PATENTSCHRIFT

(11) **EP 1 481 297 B1**
(45) Veröffentlichungstag und Bekanntmachung des Hinweises auf die Patenterteilung: **09.08.2006**
(21) Anmeldenummer: 02787884.2
(22) Anmeldetag: 30.11.2002
(51) Int. Cl.: G05B 19/042, G05B 19/18

(54) **VERFAHREN ZUR ÜBERPRÜFUNG EINER SCHNITTSTELLE**
METHOD FOR EXAMINING AN INTERFACE
PROCEDE POUR VERIFIER LE FONCTIONNEMENT D'UNE INTERFACE

(30) Priorität: 01.02.2002 DE 10204172
(43) Veröffentlichungstag der Anmeldung: 01.12.2004
(73) Patentinhaber: Dr. Johannes Heidenhain GmbH, 83292 Traunreut (DE)
(72) Erfinder: Wastlhuber, Robert, 84518 Garching/Alz (DE); Baumgartner, Alfons, 83224 Grassau (DE)
(86) Internationale Anmeldenummer: PCT/EP2002/013544
(87) Internationale Veröffentlichungsnummer: WO 2003/065137

(56) Entgegenhaltungen:
- EP-A- 0 352 683
- EP-A- 0 421 471
- DE-A- 4 107 007

## Beschreibung

Die Erfindung betrifft ein Verfahren zur Überprüfung der Schnittstelle zwischen einer Numerischen Steuerung und mehreren Peripherieeinheiten. Solche Schnittstellen bestehen aus einem Adreß- und einem Datenbus, über den Peripherieeinheiten an die Numerische Steuerung angeschlossen sind. Die Peripherieeinheiten und darin enthaltene Register können über den Adreßbus ausgewählt werden. Über den Datenbus können dann Daten in das ausgewählte Register geschrieben oder von dem ausgewählten Register der jeweiligen Peripherieeinheit gelesen werden.

Die Numerische Steuerung einer Werkzeugmaschine muß einerseits zahlreiche Sensoren (z.B. Positionsmeßgeräte) auslesen und andererseits Aktoren (z.B. Achsantriebe) mit Befehlen versorgen können. Werden die Sensoren und Aktoren über eine gemeinsame Schnittstelle angesprochen, kann eine große Zahl von solchen Peripherieeinheiten zustande kommen. Innerhalb einer Peripherieeinheit können dabei verschiedene Register vorkommen. So werden von einem Positionsmeßgerät verschiedenste Daten angeboten, etwa verschiedene Spannungspegel der Positionssensoren (z.B. für die phasenverschobene Abtastung einer Teilungsstruktur) oder Informationen über den Typ des Positionssensors.

Die DE 43 42 052 C2 beschreibt einen Steuerrechner, der über einen Adreßbus mit mehreren Peripherieeinheiten verbunden ist. Um die Peripherieeinheiten ansprechen zu können, wird eine Vorrichtung beschrieben, mit der den Peripherieeinheiten einfach und fehlerfrei eine Adresse zugewiesen werden kann.

Es besteht nun das Problem, daß für sicherheitsgerichtete Anwendungen, wie sie im Bereich der Numerischen Steuerungen für Werkzeugmaschinen immer häufiger vorkommen, eine korrekte Funktion der Schnittstelle zwischen der Numerischen Steuerung und den Peripherieeinheiten sicher gestellt werden muß. Besonders wichtig ist, daß die Peripherieeinheiten nicht verwechselt werden. Sind mehrere baugleiche Peripherieeinheiten vorhanden, genügt das Auslesen eines Registers mit einer bauartspezifischen Kennung nicht, da diese für alle baugleichen Peripherieeinheiten gleich ist. Wird aber eine falsche Peripherieeinheit angesprochen, die jedoch baugleich mit der eigentlich gemeinten ist, wird beispielsweise aus einem Register ein Positionswert gelesen, der von der Steuerung nicht sofort als unsinnig erkannt werden kann, da er ja tatsächlich einem Positionswert entspricht - nur eben von der falschen Peripherieeinheit. Eine solche Verwechslung kann auftreten, wenn der Adreßbus der Schnittstelle zwischen Numerischer Steuerung und Peripherieeinheit fehlerhaft arbeitet.

Es kann also bei einem Defekt der Schnittstelle zwischen Steuerung und Peripherieeinheit auch bei fehlerfreier Vergabe der Adressen in den Peripherieeinheiten nach der DE 43 42 052 C2 zu einer Verwechslung der Peripherieeinheiten kommen.

In sicherheitsgerichteten Numerischen Steuerungen ist es auch üblich, kritische Parameter (etwa Positionswerte) mittels doppelt ausgeführter Sensoren zu erfassen, die über zwei getrennte Schnittstellen abgefragt werden. Es ist aber sehr aufwendig, solche Schnittstellen doppelt auszuführen. Günstiger wäre es, die Funktion einer einzelnen Schnittstelle so sicherzustellen, daß beide Sensoren abgefragt werden können, ohne daß die Gefahr einer Verwechslung der beiden Sensoren besteht.

Aus der Druckschrift DE 41 07 007 ist noch bekannt, eine eindeutige Kennung von einer Überwachungseinrichtung in die Steuerung adressgesteuert einzuschreiben, diese wieder auszulesen und beide Werte in der Überwachungseinrichtung zu vergleichen. Damit soll das korrekte Funktionieren des Datenbusses geprüft werden.

Aufgabe der Erfindung ist es daher, ein Verfahren anzugeben, mit dem die Schnittstelle zwischen einer Numerischen Steuerung und deren Peripherieeinheiten auf einfache Art und Weise überprüft werden kann.

Diese Aufgabe wird gelöst durch ein Verfahren nach Anspruch 1. Vorteilhafte Details des Verfahrens ergeben sich aus den von Anspruch 1 abhängigen Ansprüchen.

Zur Überprüfung der Schnittstelle einer Numerischen Steuerung zu mehreren Peripherieeinheiten wird vorgeschlagen, in einem Initialisierungsschritt eine eindeutige Kennung in ein über den Adreßbus angesprochenes Kennungsregister jeder Peripherieeinheit zu schreiben. In einem Überprüfungsschritt werden die Kennungsregister aller Peripherieeinheiten ausgelesen. Dabei wird der ausgelesene Wert mit der eindeutigen Kennung jeder Peripherieeinheit als Erwartungswert verglichen. Bei Übereinstimmung aller gelesenen Werte.mit den Erwartungswerten kann auf eine erfolgreiche Adressierung aller Peripherieeinheiten geschlossen werden, andernfalls kann eine Fehlermeldung erzeugt werden, auf die entsprechend reagiert werden kann.

Bei regelmäßiger Wiederholung dieses Verfahrens kann ein auftretender Fehler in der Schnittstelle zwischen Numerischer Steuerung und Peripherieeinheiten rechtzeitig erkannt und entsprechend reagiert werden.

Weitere Vorteile sowie Einzelheiten der vorliegenden Erfindung ergeben sich aus der nachfolgenden Beschreibung eines bevorzugten Verfahrens anhand der Figuren. Dabei zeigt
- Figur 1: Die Schnittstelle einer Numerischen Steuerung mit mehreren Peripherieeinheiten,
- Figur 2: ein Verfahren zur Überprüfung der Schnittstelle zwischen der Numerischen Steuerung und den Peripherieeinheiten.

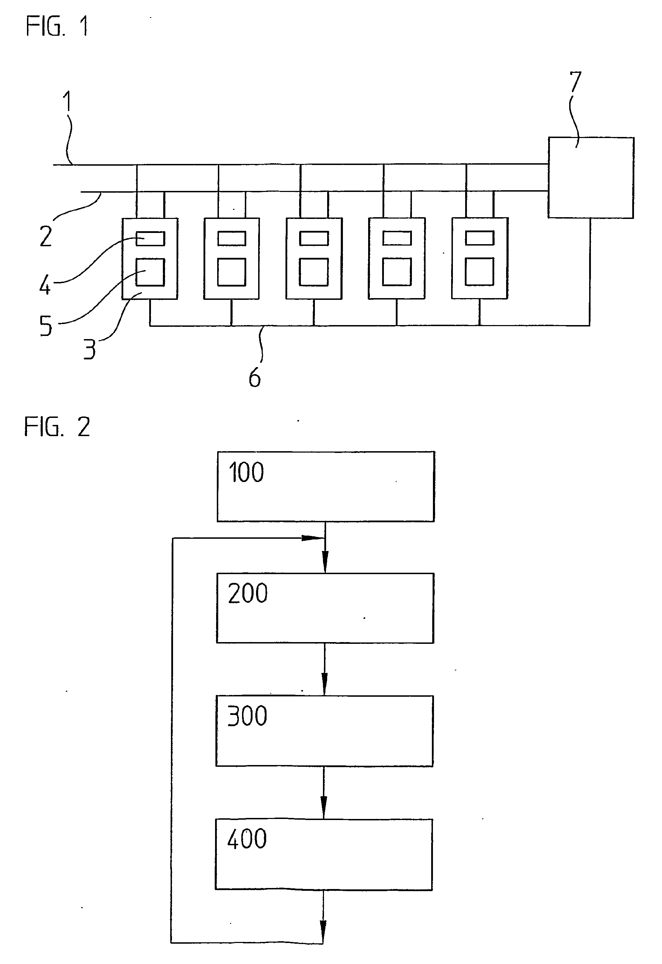

Figur 1 zeigt eine Numerische Steuerung 7, die über eine Schnittstelle 1, 2 mit mehreren Peripherieeinheiten 3 verbunden ist. Innerhalb jeder Peripherieeinheit 3 befinden sich mehrere Register (Speicherstellen) 4, 5. In jeder Peripherieeinheit 3 existiert ein Kennungsregister 4 und wenigstens ein weiteres Register 5, in dem je nach Art der Peripherieeinheit 3 verschiedenste Daten abgelegt werden können.

Die Numerische Steuerung 7 steuert beispielsweise eine Werkzeugmaschine, an der verschiedenste Sensoren (z.B. Positionsmeßgeräte) und Aktoren (Achsantriebe, Spindelantriebe) angebracht sind. Diese Sensoren und Aktoren entsprechen den in Figur 1 gezeigten Peripherieeinheiten 3, die über die Schnittstelle 1, 2 mit der Numerischen Steuerung 7 verbunden sind.

Die Schnittstelle 1, 2 besteht dabei aus einem Adreßbus 1 und einem Datenbus 2. Sowohl der Adreßbus 1 als auch der Datenbus 2 weisen eine Bitbreite auf, die im Falle des Adreßbusses 1 die Zahl der adressierbaren Register 4, 5 begrenzt, bzw. im Falle des Datenbusses 2 die Bitbreite eines übertragenen Datenwortes. Zusätzlich zum Adreßbus 1 und Datenbus 2 werden noch Steuerleitungen benötigt, die beispielsweise festlegen, ob ein Zugriff auf ein Register 4, 5 lesend oder schreibend erfolgen soll.

Bei der Adressierung eines bestimmten Registers 4, 5 wird ein Teil der Breite des Adreßbusses 1 zur Adressierung der jeweiligen Peripherieeinheit 3 verwendet, ein weiterer Teil zur Adressierung des Registers 4, 5 innerhalb der Peripherieeinheit 3. Über eine Signalleitung 6 kann die Numerische Steuerung 7 den Peripherieeinheiten 3 mitteilen, ob die Adressierung über den Adreßbus 1 invertiert oder nicht invertiert erfolgt. So wird beispielsweise die Adresse "0101" bei nicht invertierter Adressierung von den Peripherieeinheiten 3 genauso interpretiert wie die Adresse "1010" bei invertierter Adressierung.

Ein möglicher Fehler des Adreßbusses 1, der unbedingt vermieden bzw. rasch erkannt werden muß, besteht in der falschen Adressierung der jeweiligen Peripherieeinheiten 3. Denn wenn beispielsweise durch einen Erdschluß eines Bits zur Adressierung einer Peripherieeinheit 3 eine falsche Peripherieeinheit 3 angesprochen wird, können durchaus sinnvolle Werte in das adressierte Register 4, 5 geschrieben bzw. aus diesem gelesen werden, wenn es sich bei der fälschlicherweise adressierten Peripherieeinheit 3 um eine zur eigentlich gewünschten Peripherieeinheit 3 baugleiche Peripherieeinheit 3 handelt. Ein Achsantrieb kann so beispielsweise einen Befehl für eine Bewegung erhalten, der eigentlich für eine andere Achse der Werkzeugmaschine gedacht war, es können also unkontrollierte Bewegungen ausgeführt werden.

Anhand von Figur 2 wird nun ein Verfahren erläutert, mit dem solche Verwechslungen von Peripherieeinheiten 3 vermieden, bzw. solche Fehler im Adreßbus 1 schnell erkannt werden können.

Zunächst wird von der numerischen Steuerung 7 in einem Initialisierungsschritt 100 das Kennungsregister 4 jeder Peripherieeinheit 3 über den Adreßbus 1 angesprochen und über den Datenbus 2 mit einer eindeutigen Kennung beschrieben. Diese kann beispielsweise aus einer laufenden Nummer für jede der Peripherieeinheiten 3 bestehen.

In einem Überprüfungsschritt 200 wird von der Numerischen Steuerung 7 das Kennungsregister 4 jeder Peripherieeinheit 3 ausgelesen und die gelesene Kennung jeweils mit einem Erwartungswert verglichen. Der Erwartungswert entspricht dabei der in Schritt 100 geschriebenen eindeutigen Kennung der gerade angesprochenen Peripherieeinheit 3. Stimmt eine gelesene Kennung nicht mit dem Erwartungswert überein, liegt ein Fehler vor. Es wird dann eine Fehlermeldung erzeugt und entsprechend reagiert, indem etwa die Werkzeugmaschine in einen sicheren Zustand versetzt wird. Stimmen alle gelesenen Werte mit ihrem jeweiligen Erwartungswert überein, so ist die korrekte Adressierung aller Peripherieeinheiten 3 sichergestellt.

Um nun die Schnittstelle 1, 2 zwischen Numerischer Steuerung 7 und Peripherieeinheiten 3 weiter zu überprüfen, kann in einem zusätzlichen Überprüfungsschritt 300 das Kennungsregister 4 (oder eines oder mehrere andere Register 5, falls sie zur Verfügung stehen) dazu verwendet werden, nacheinander mehrere Bitmuster zu schreiben und wieder zu lesen. So läßt sich ein 8-Bit Datenbus 2 mit dem Schreiben und Rücklesen der vier Bitmuster

| | D0 | D1 | D2 | D3 | D4 | D5 | D6 | D7 |
|---|---|---|---|---|---|---|---|---|
| M1 | 0 | 1 | 0 | 1 | 0 | 1 | 0 | 1 |
| M2 | 0 | 0 | 1 | 1 | 0 | 0 | 1 | 1 |
| M3 | 0 | 0 | 0 | 0 | 1 | 1 | 1 | 1 |
| M4 | 1 | 0 | 0 | 0 | 0 | 0 | 0 | 0 |

vollständig auf Kurzschlüsse und Nebenschlüsse prüfen. D0 - D7 benennen hier die acht Datenleitungen des Datenbusses 2, M1 - M4 benennen die Bitmuster. Auf die Reihenfolge der Bitmuster kommt es dabei nicht an, wie unten noch erläutert wird. Ebenso läßt sich ein 16-Bit Datenbus 2 mit dem Schreiben und Rücklesen der fünf Bitmuster

| | D0 ... | | | | | | | | | | | | | | | D15 |
|---|---|---|---|---|---|---|---|---|---|---|---|---|---|---|---|---|
| M1 | 0 | 1 | 0 | 1 | 0 | 1 | 0 | 1 | 0 | 1 | 0 | 1 | 0 | 1 | 0 | 1 |
| M2 | 0 | 0 | 1 | 1 | 0 | 0 | 1 | 1 | 0 | 0 | 1 | 1 | 0 | 0 | 1 | 1 |
| M3 | 0 | 0 | 0 | 0 | 1 | 1 | 1 | 1 | 0 | 0 | 0 | 0 | 1 | 1 | 1 | 1 |
| M4 | 0 | 0 | 0 | 0 | 0 | 0 | 0 | 0 | 1 | 1 | 1 | 1 | 1 | 1 | 1 | 1 |
| M5 | 1 | 0 | 0 | 0 | 0 | 0 | 0 | 0 | 0 | 0 | 0 | 0 | 0 | 0 | 0 | 0 |

vollständig auf Kurzschlüsse und Nebenschlüsse überprüfen, wobei wiederum die Reihenfolge der Bitmuster beliebig ist.

Anhand des 8-Bit Datenbusses 2 soll hier kurz das Prinzip erläutert werden, nach dem die Bitmuster M1 - M4 ausgewählt sind. Um Kurzschlüsse zu erkennen, also das Festhängen einer der Leitungen des Datenbusses 2 auf logisch "0" oder logisch "1", genügt es, wenn jede der Datenleitungen D0 - D7 erfolgreich wenigstens einmal auf logisch "1" und wenigstens einmal auf logisch "0" getestet wurde. Aufwendiger ist das Testen auf Nebenschlüsse. Es muß getestet werden, ob sich jede Datenleitung D0 - D7 unabhängig von jeder der anderen Datenleitungen D0 - D7 schalten läßt. Für einen 2^{N}-Bit breiten Datenbus 2 läßt sich dies mit N Bitmustern bewerkstelligen, im Beispiel des 8-Bit breiten Datenbusses 2 also mit drei Bitmustern M1 - M3. Dabei muß jede mögliche N-Bitfolge (0-0-0, 1-0-0, 0-1-0, ... , 1-1-1) auftreten, wenn man jeweils die Datenleitungen D0 - D7 separat für jedes Bitmuster M1 - M3 betrachtet.

Da in diesen 2^{N} N-Bitfolgen zwei N-Bitfolgen (im Beispiel auf D0 und auf D7) nur aus logisch "0" bzw. logisch "1" bestehen, benötigt man ein weiteres Bitmuster M4, das die beiden Datenleitungen D0 und D7 auf den jeweils inversen Pegel schaltet. Dies wird im obigen Beispiel eines 8-Bit breiten Datenbusses 2 erreicht, indem M4 auf D0 eine logische "1" und auf D7 eine logische "0" aufweist. Die logischen Pegel der Datenleitungen D1 - D6 sind in diesem Beispiel für M4 beliebig, da sie bereits logisch "0" und logisch "1" aufwiesen. Die Unterbrechung einer der Datenleitungen D0 - D7 führt ebenfalls zu einem Fehlschlagen des Testes, da nicht mehr alle logischen Pegel auf dieser Datenleitung einstellbar sind.

Zur vollständigen Überprüfung eines 2^{N}-bit breiten Datenbusses 2 sind also lediglich N+1 Bitmuster M1, M2, M3, M4 notwendig (für N >= 2). Dies ergibt einen gegenüber dem Test aller möglichen Bitmuster eines 2^{N}-bit breiten Datenbusses 2 (2 hoch 2^{N}, also 256 für einen 8-bit breiten Datenbus 2) eine erhebliche Zeitersparnis.

Schritt 400 beschreibt eine weitere Möglichkeit zur Überprüfung der Schnittstelle 2. Dieser weitere Überprüfungsschritt 400 besteht darin, die Adressierungsart des Adreßbusses 1 wie weiter oben beschrieben zu invertieren. Die Auswahl der Adressierungsart kann dabei über die Signalleitung 6 erfolgen. Nach dem Invertieren der Adressierungsart lassen sich die Schritte 200 und 300 wiederholen. Einzelne Bits des Adreßbusses 1, die auf einem Potential fest hängen, werden so erkannt, auch wenn sie bei fester Adressierungsart (entweder nicht invertiert oder invertiert) nie das Potential wechseln müßten.

Der weitere Überprüfungsschritt 400 läßt sich aber auch besonders Vorteilhaft mit den beiden zuvor beschriebenen Überprüfungsmöglichkeiten verzahnen, indem zum Testen des Adreßbusses 1 die Kennungsregister 4 mit nicht invertierter Adressierung beschrieben (Schritt 100) und mit invertierter Adressierung gelesen werden (Schritt 200).

Auch beim Test des Datenbusses 2 mittels geschriebener und rückgelesener Bitmuster M1, M2, M3, M4 (Schritt 300) kann zwischen dem Lesen und Schreiben der Bitmuster M1, M2, M3, M4 die Adressierungsart wie beschrieben gewechselt (invertiert) werden.

Während des Betriebes der Numerischen Steuerung 7 sollten die oben beschriebenen Schritte 100, 200, 300, 400 zur Überprüfung der Schnittstelle 1, 2 in regelmäßigen Abständen wiederholt werden. Die Zeitabstände dieser Überprüfung richten sich dabei nach der Zeit, die das System aus Werkzeugmaschine und Numerischer Steuerung 7 auch mit einer fehlerhaften Schnittstelle 1, 2 sicher betrieben werden kann. Es kann dabei auch die Wiederholung nur eines Teils der Schritte 100, 200, 300, 400 genügen, wenn etwa die im Initialisierungsschritt 100 geschriebenen eindeutigen Kennungen nicht mehr überschrieben werden.

Der Ablauf der Schritte 100 - 400 ist wie bereits beschrieben nicht auf die Reihenfolge festgelegt, die in Figur 2 dargestellt ist. So läßt sich Schritt 400 mit den Schritten 100, 200, 300 verzahnen. Der Schritt 300 kann auch vor Schritt 200 durchgeführt werden. Weitere Abwandlungen der Reihenfolge sind ebenso möglich.

Keiner der Schritte zur Überprüfung der Schnittstelle 1, 2 würde im übrigen ohne funktionierende Steuerleitungen erfolgreich verlaufen, so daß deren Funktion mit dem beschriebenen Verfahren ebenfalls getestet wird.

## Patentansprüche

1. Verfahren zur Überprüfung einer Schnittstelle (1, 2) zu mehreren Peripherieeinheiten (3) einer Numerischen Steuerung (7), bestehend aus folgenden Schritten:
- Schreiben einer eindeutigen Kennung in ein über einen Adreßbus (1) angesprochenes Kennungsregister (4) jeder Peripherieeinheit (3) in einem Initialisierungsschritt (100),
- Auslesen der Kennungsregister (4) in einem Überprüfungsschritt (200), wobei die aus den Kennungsregistem (4) gelesenen Kennungen mit Erwartungswerten verglichen werden, die den im Initialisierungsschritt (100) geschrieben eindeutigen Kennungen entsprechen, und wobei bei Nichtübereinstimmung einer Kennung mit deren Erwartungswert eine Fehlermeldung erzeugt wird, bzw. bei Übereinstimmung aller Kennungen mit den jeweiligen Erwartüngswerten eine erfolgreiche Adressierung aller Peripherieeinheiten (3) über den Adreßbus (1) erkannt wird.

2. Verfahren nach Anspruch 1, bei dem in einem zusätzlichen Überprüfungsschritt (300) nacheinander mehrere Bitmuster (M1, M2, M3, M4) in jede der Peripherieeinheiten (3) geschrieben und rückgelesen werden, wobei bei erfolgreichem Rücklesen Kurzschlüsse, Nebenschlüsse und Unterbrechungen des Datenbusses (2) ausgeschlossen sind.

3. Verfahren nach Anspruch 2, wobei der Datenbus (2) mit einer Breite von 2^{N} Bits durch genau N+1 Bitmuster (M1, M2, M3, M4) überprüft wird.

4. Verfahren nach Anspruch 1, 2 oder 3, bei dem in einem weiteren Überprüfungsschritt (400) die Adressierung der Peripherieeinheiten (3) invertiert wird.

5. Verfahren nach Anspruch 4, bei dem die Kennungsregister (4) beim Schreiben der Kennungen im Initialisierungsschritt (100) nicht invertiert adressiert werden und beim Auslesen der Kennungen im Überprüfungsschritt (200) invertiert adressiert werden.

6. Verfahren nach Anspruch 4, bei dem die Bitmuster (M1, M2, M3, M4) mit nicht invertierter Adressierung geschrieben und mit invertierter Adressierung ausgelesen werden.

7. Verfahren nach einem der vorhergehenden Ansprüche, wobei zumindest ein Teil der Schritte (100, 200, 300, 400) nach einer vorgegebenen Zeitspanne wiederholt werden.

## Claims

1. Method for examining an interface (1, 2) to several peripheral units (3) of a numerical control system (7) comprising the following steps:
• entry of a unique identification into an identification register (4) of each peripheral unit (3) addressed via an address bus (1) in an initialisation step (100),
• readout of the identification register (4) in an examination step (200), wherein the identifications read from the identification register (4) are compared with expected values, which correspond to the unique identifications entered in the initialisation step (100), and wherein in the case where an identification is not consistent with its expected value an error message is generated, or in the case where all identifications are consistent with the respective expected values a successful addressing of all the peripheral units (3) via the address bus (1) is recognised.

2. Method according to Claim 1, in which in an additional examinations step (300) several bit patterns (M1, M2, M3, M4) are entered in succession into each of the peripheral units (3) and read back, wherein on successful readback short-circuits, shunts and interruptions of the data bus (2) are excluded.

3. Method according to Claim 2, wherein the data bus (2) with a width of 2^{N} bits is examined by exactly N+1 bit patterns (M1, M2, M3, M4).

4. Method according to Claim 1, 2 or 3, in which in a further examination step (400) the addressing of the peripheral units (3) is inverted.

5. Method according to Claim 4, in which the identification registers (4) are not addressed in an inverted manner during entry of the identifications in the initialisation step (100) and are addressed in an inverted manner during readout of the identifications in the examination step (200).

6. Method according to Claim 4, in which the bit patterns (M1, M2, M3, M4) are entered with non-inverted addressing and read out with inverted addressing.

7. Method according to one of the preceding claims, wherein at least a portion of the steps (100, 200, 300, 400) is repeated after a given time span.

## Revendications

1. Procédé pour vérifier une interface (1, 2) communiquant avec plusieurs unités périphériques (3) d'une commande numérique (7), comprenant les étapes suivantes qui consistent à:
- inscrire par l'intermédiaire d'un bus d'adresse (1), au cours d'une étape d'initialisation, un identifiant non équivoque dans un registre d'identifiant (4) de chaque unité périphérique (3),
- lire le registre d'identifiant (4) au cours d'une étape de vérification (200), les identifiants lus dans le registre d'identifiant (4) étant comparés avec des valeurs escomptées qui correspondent aux identifiants non équivoques inscrits lors de l'étape d'initialisation et, un message d'erreur étant généré en cas de non concordance d'un identifiant avec la valeur escomptée ou le succès de l'adressage de toutes les unités périphériques (3) étant constaté par l'intermédiaire du bus d'adressage (1) dans le cas d'une concordance de tous les identifiants avec les valeurs escomptées correspondantes,.

2. Procédé selon la revendication 1, selon lequel au cours d'une étape de vérification (300) supplémentaire, on inscrit et on lit successivement plusieurs modèles binaires (M1, M2, M3, M4) dans chacune des unités périphériques (3), des court-circuits, des courants de fuite et des coupures au niveau du bus de données (2) étant exclus dans la mesure où la lecture a lieu avec succès.

3. Procédé selon la revendication 2, selon lequel on vérifie le bus de données (2) de largeur 2^{N} bits à l'aide de exactement N+1 modèles binaires.

4. Procédé selon la revendication 1, 2 ou 3, selon lequel au cours d'une étape de vérification (400) supplémentaire on procède à un adressage inverse des unités périphériques (3).

5. Procédé selon la revendication 4, selon lequel on adresse les registres d'identifiant (4), avec un adressage non inversé pour l'inscription des identifiants au cours de l'étape d'initialisation (100), et avec un adressage inversé, pour la lecture des identifiants au cours de l'étape de vérification (200).

6. Procédé selon la revendication 4, selon lequel on inscrit les modèles binaires (M1, M2, M3, M4) avec un adressage non inversé et on les lit avec un adressage inversé.

7. Procédé selon une des revendications précédentes, selon lequel on répète au moins une partie des étapes (100, 200, 300, 400) après un laps de temps prédéterminé.
